# EUROPEAN PATENT APPLICATION

(11) **EP 1 967 923 A2**
(43) Date of publication of application: **10.09.2008**
(21) Application number: 08250766.6
(22) Date of filing: 06.03.2008
(51) Int. Cl.: G05B 19/042, G05B 23/02, H04L 12/28

(54) **Utility control device anticipating users' needs**

(30) Priority: 07.03.2007 US 683326
(71) Applicant: Optimal Innovations Inc, Bridgetown (BB)
(72) Inventor: Schoettle, Roland, Freeport Grand Bahama Island (BS)
(74) Representative: Jackson, Richard Eric

(57) **Abstract**

The present invention is directed to a system and method which a utility control device is designed to anticipate the needs of user's and to conform to those anticipated needs. In one embodiment, the device senses the presence of a particular user and conforms its operation to operate in accordance with a pre-established user profile. The device can anticipate the user by directly sensing the user, such as by weight, biometrics, size, voice recognition, electronic key tag, and the like or by time or location. The pre-established profile can, for example, be user programmed or can be based on previous actions taken by the user under the came conditions. In another embodiment, the user carries, in addition to his/her identity profile, the user's preferences in accessible electronic form to allow the utility control device to assemble a customized response without requiring a pre-established user profile. The accessible electronic form can include: a key fob, electronic bracelet or any other electronically available formation of relevant data that can be applicable to generate a custom response.

## Description

### CROSS-REFERENCE TO RELATED APPLICATIONS

The present application is related to concurrently filed, co-pending, and commonly assigned U.S. Patent Application No. 11/683,304, filed March 7, 2007, entitled "SYSTEMS AND METHODS FOR LINKING UTILITY CONTROL DEVICES"; U.S. Patent Application No. 11/683,327, filed March 7, 2007, entitled "SYSTEM AND METHOD FOR INFRASTRUCTURE REPORTING"; U.S. Patent Application No. 11/683,298, filed March 7, 2007, entitled "LIGHT SWITCH USED AS A COMMUNICATION DEVICE"; U.S. Patent Application No. 11/683,308, filed March 7, 2007, entitled "SYSTEM AND METHOD FOR PREMISES MONITORING USING WEIGHT DETECTION"; U.S. Patent Application No. 11/683,335, filed March 7, 2007, entitled "PLUG AND PLAY UTILITY CONTROL MODULES," and U.S. Patent Application No. 11/683,354, filed March 7, 2007, entitled "SYSTEM AND METHOD FOR SUBSTITUTING DATA IN RESPONSES TO MULTIMEDIA INQUIRIES"; the disclosures of which are hereby incorporated herein by reference.

### TECHNICAL FIELD

This disclosure relates to utility control devices and more specifically to systems and methods for enabling a utility control device to anticipate a user's needs.

### BACKGROUND OF THE INVENTION

Utility control devices are ubiquitous. Light switches, power outlets, thermostats, motion sensors, temperature displays, alarm lights, weather warnings and the like are located throughout a premises and are positioned for easy human interface. Often it is desired for an action to be taken or information obtained by a user and the nearest utility control device and/or display that can accommodate that action is in another part of the premises or even outside of the premises. In some cases this is merely inconvenient. In other cases it is critical for a user to have immediate access to a control device or to information pertaining to an emergent or anomaly condition.

### BRIEF SUMMARY OF THE INVENTION

The present invention is directed to a system and method which a utility control device is designed to anticipate the needs of user's and to conform to those anticipated needs. In one embodiment, the device senses the presence of a particular user and conforms its operation to operate in accordance with a pre-established user profile. The device can anticipate the user by directly sensing the user, such as by weight, biometrics, size, voice recognition, electronic key tag, and the like or by time or location. The pre-established profile can, for example, be user programmed or can be based on previous actions taken by the user under the came conditions.

In another embodiment, the user carries, in addition to his/her identity profile, the user's preferences in accessible electronic form to allow the utility control device to assemble a customized response without requiring a pre-established user profile. The accessible electronic form can include: a key fob, electronic bracelet or any other electronically available formation of relevant data that can be applicable to generate a custom response.

In other embodiments, the accessible electronic preferences could include more sophisticated data, such as, for example, medical data or security data. A sufficiently advanced building could, for example, gather data from a user that would alert the building to the fact that the user could go into an epileptic attack when certain senses are overloaded in a particular way. The utility control devices of the building could then react to this information by sending a chaperon, increasing air circulation, turning down sound levels and/or sending only calming visual information in the region of the user. In yet another embodiment, where the utility control device is the wall itself, the wall could change color or display calming scenery, for example.

In other embodiments, the utility control devices could determine that the user has not taken his/her medicine, or that the user may be otherwise impaired or dangerous to themselves or others.

In other embodiments, the utility control devices could determine one user type and preferences and display and send appropriate standard or customized information for another user or user grouping, for example while anticipating the speed and direction of the first user.

In other embodiments, the utility control devices could determine the absence of a particular user and display and send appropriate standard or customized information to other users and remotely to the absent user's telephone, pager, or building system where the absent user is actually present.

The foregoing has outlined rather broadly the features and technical advantages of the present invention in order that the detailed description of the invention that follows may be better understood. Additional features and advantages of the invention will be described hereinafter which form the subject of the claims of the invention. It should be appreciated by those skilled in the art that the conception and specific embodiment disclosed may be readily utilized as a basis for modifying or designing other structures for carrying out the same purposes of the present invention. It should also be realized by those skilled in the art that such equivalent constructions do not depart from the spirit and scope of the invention as set forth in the appended claims. The novel features which are believed to be characteristic of the invention, both as to its organization and method of operation, together with further objects and advantages will be better understood from the following description when considered in connection with the accompanying figures. It is to be expressly understood, however, that each of the figures is provided for the purpose of illustration and description only and is not intended as a definition of the limits of the present invention.

### BRIEF DESCRIPTION OF THE DRAWINGS

For a more complete understanding of the present invention, reference is now made to the following descriptions taken in conjunction with the accompanying drawing, in which:

FIGURE 1 illustrates one embodiment of a system having a number of anticipatory utility control devices;

FIGURES 2A through 2C illustrate examples of different configurations of a utility control device; and

FIGURES 3, 4 and 5 show embodiments of the operation of an anticipatory utility control device.

### DETAILED DESCRIPTION OF THE INVENTION

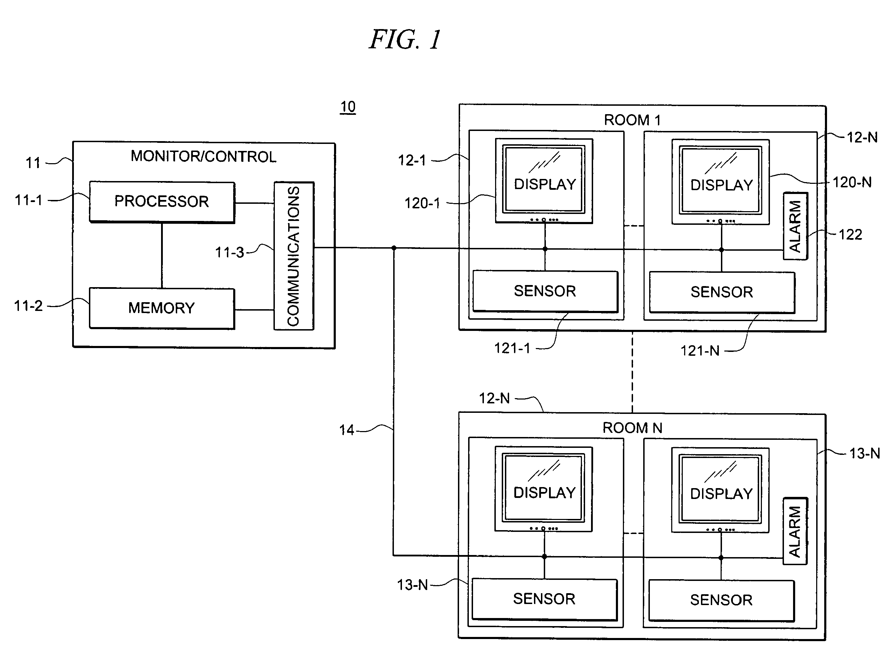

FIGURE 1 illustrates one embodiment 10 of a system having a number of anticipatory utility control devices, such as devices 12-1 to 12-N in room and other devices 13-1 to 13-N in room N. In embodiment 10 the utility control devices (not all of which need be of the anticipatory type) communicate with monitor and control device 11, which can be, for example, a PC or other computing device. In the embodiment shown., processor 11-1 in conjunction with memory 11-2 and communication control 11-3 controls, at least in part, the operation of utility devices 12-1 to 12-N and 13-1 to 13-N via communication path 14. Path 14 can be wireline, wireless or a combination thereof.

Each control device, such as device 12-1, can have any number of operational modes as will be discussed herein after. These modes can be, if desired, displayed by display 120-1 to 120-N. One or more of sensors 121-1 to 121-N can be used to determine the presence of and/or the identity of a particular user. Based on this information and possibly based on information coming from sensors at different locations, the utility control device can change its operational mode based on a pre-established profile for that user. The profile information can be stored in a memory (not shown) within the device and processed locally with a processor (also not shown) or the profile can be stored in device 11 and processed thereat by, for example, processor 11-1 based on information arriving from one or more control devices.

For example, assume a series of sensors, such as weight sensors, or motion sensors (or a combination thereof) determine that a person weighing 210 pounds is moving faster than normal toward a bedroom. The system calculates from experience, or from programming, that the premises owner (who weighs 210 pounds) is moving quickly to the bedroom.

Note that the sensors need not be permanently associated with the building but could, if desired, be carried by one or more users. This could, for example, be by using a "key fob" or other wireless device using RF, nearfield, Bluetooth, or any other protocol. Also note that the user's personal device can contain the user's identity, one or more profiles and, if desired, other sophisticated information, such as, for example, medical records, security data, biometric data, etc. The data could include lists of "associates" for various different activities. These lists could be used, for example, for emergency contact purposes.

Suppose that a sensor in the bedroom is reporting an abnormally high and rising temperature. A utility device in the bedroom, for example the light switch, (or even better a light switch along the path) could then become operational according to a profile of the owner to display the names and locations of all family members along with an "open mike" to the fire emergency responders. The system could use voice recognition, key fobs with voice ID intercom, RFID, etc., to determine where users are located and to thereupon "direct traffic" as appropriate for the emergency or other determined condition. The customized responses could include any of; custom menus, custom advertising, specialized reminders, location based services such as assigning the nearest utility control device to become a phone (with the applicable menus) to eliminate the need to rush to a dedicated telephone, set the temperature for the room or area, change lighting, unlock doors or windows, play messages specified for each user, etc.

Now suppose the system detects foot steps belonging to a thirty pound person running in the same direction. The utility device could, for example, be pre-programmed to anticipate the need of the child. The control device then could become a speaker, perhaps using alarm 122, that calls out the child's name and issues instructions such as, "Johnny, please turn around and WALK to the front of the house and go outside. Then go to the neighbor's house and wait for the family there." The system can then call the neighbor and alert them to the problem. Presumably this would be after the fire responders were alerted. Alarm 122 could be a speaker, a wireless transmitter or a combination thereof.

The example discussed above is an example of anticipation, but illustrates how the utility device, while responding to an emergency, also responds on a user specific basis. In more normal situation, when the child enters the bedroom the utility device becomes a normal light switch, but when the father enters the room the device displays weather and other useful information, perhaps including a thermostat for controlling the temperature in the children's room. Another example would be where the wife is concerned about her mother in another city and the display, as she approaches, shows outputs from sensors at her mother's location. The display could also show her who else is in her home (or building) and who is in her mother's apartment.

In situations where the user carries a personal ID with personal data, a building could anticipate problem conditions and take steps to eliminate the problem or to warn the user of potential danger. Thus, if a person is, say, allergic to peanuts, the building (or airplane) would alert that user as soon as the user enters a zone where peanuts are known to be, or where they are detected. This warning could be public or private directly to the device or broadcast over a special "alert" frequency monitored by those who have certain problems.

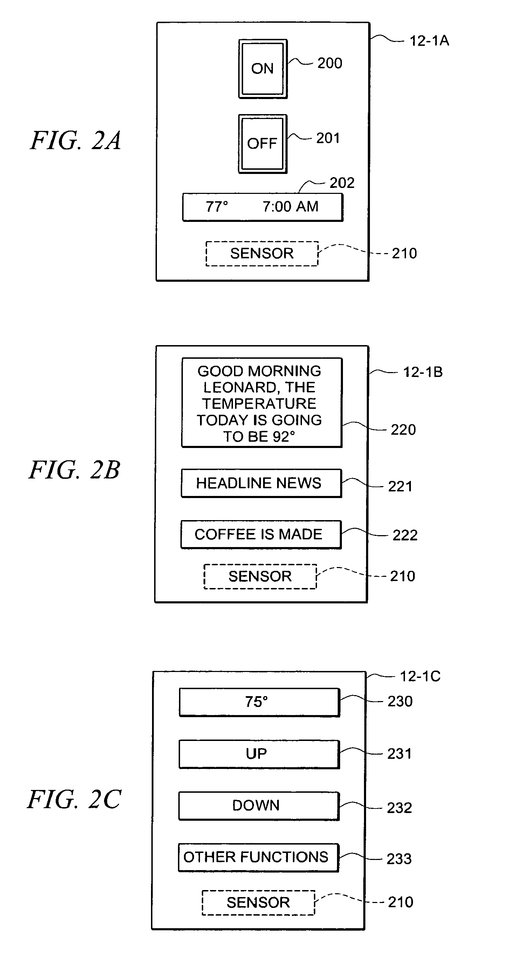

FIGURES 2A through 2C illustrate examples of different configurations of a utility control device. For example, FIGURE 2A shows device 12-1A having an on switch 200, an off switch 201, a room temperature and time display 202 and sensor(s) 210. The senor(s) is used to assist in the determination of the presence of particular users. Note that the switches are touch sensitive "soft keys" such that their function can change from time to time. Device 12-1 would have an alarm (not shown) to send and/or display messages.

FIGURE 2B shows the same device 12-1 now in a 'B' configuration (12-1B) such that display 221 and 222 provide information based on the anticipated needs of the particular user and the time of day (morning).

FIGURE 2C shows the same device 12-1 now in a 'C' configuration (12-1C) such that displays 230, 231, and 232 act as a thermostat, and 233 allows for other input/output. In this manner device 12-1 provides information based on the anticipated need of a particular user at this point in time as determined from the combination of knowing which user is present and knowing the identified user's profile and preferences as they pertain to the circumstances of time, location, and other sensor/detector activity.

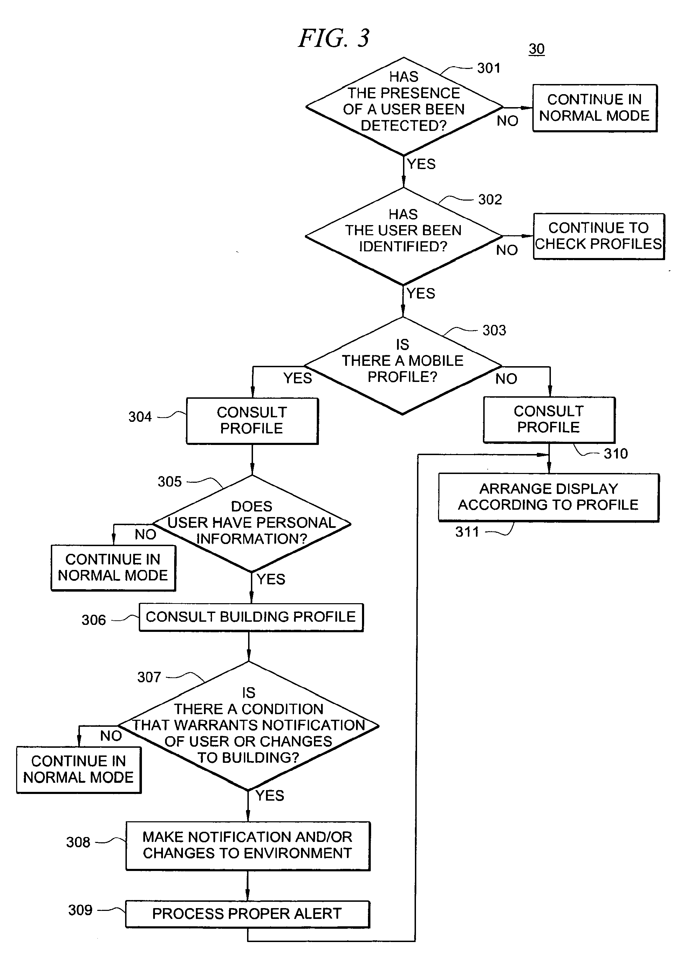

FIGURE 3 shows one embodiment 30 of the operation of an anticipatory utility control device. Process 301 determines if the presence of any user has been detected. This detection can be by one or more sensors in the device or by a device sensor in combination with information from other devices or from the monitor. If a user has not been identified the device continues, under control of process 302 in its normal mode of operation. Normal, in this situation means that it functions independent of the presence of any user, but a device may change based on premises needs as opposed to user needs.

When a user's presence is detected, process 302 determines if a particular user has been identified. If so, then various user profiles or information concerning various known user's is examined to see if a determination of a particular user can be made.

Process 303 determines if the user is carrying a mobile profile, perhaps in a key fob or other communication device. If so, then process 304 controls the access to the profile and/or other information available from the information not contained in the system main memory.

Process 305 determines from the mobile information, or from a location external thereto, if user specific personal information (such as medical, security, biometric, contact lists, etc) is available. If there is user specific information available, then processes 306 and 307 in conjunction with the building's data bases and/or sensors, determines if there is a condition that needs to be adjusted with respect to the building, or whether an alert to the user (or to some other location) needs to occur. If so, process 308 controls such notification and/or adjustment and process 309 processes any necessary alert. One such alert can be, for example, a broadcast on a special frequency monitored by anyone who cares to listen, or on a frequency specified in the user's profile. Process 311 then arranges the display on a local device in accordance with the profile of the user as determined by the mobile profile. In situations where there is no mobile profile, then process 303 consults the system's data base for a profile.

This system can be used, for example, to keep physical track of a person with dementia such that as that person passed close to various devices, sensors would report their location in accordance with instructions either contained on the person or in a pre-established data base. In such a situation, a user, perhaps at a different location, can send commands on behalf of one or more user's with the group of user's to whom a particular user has command control being identified by said user's profile or in a database associated therewith.

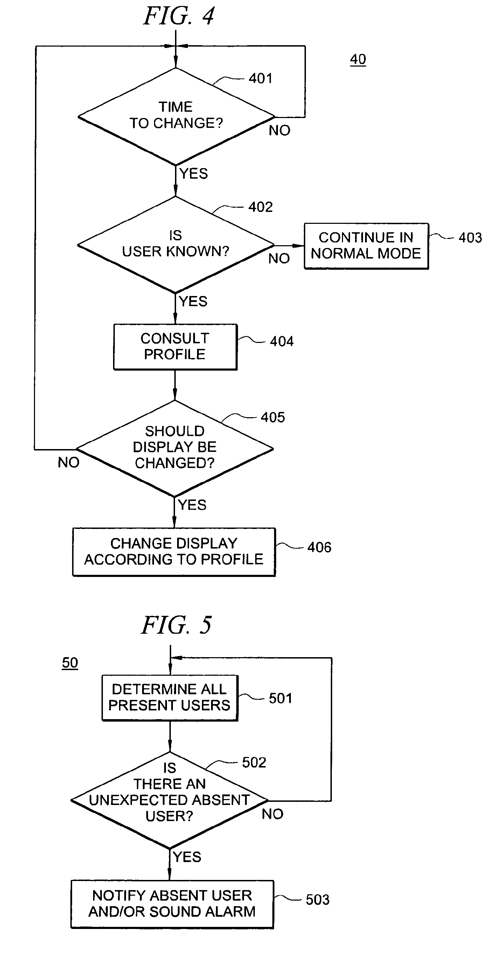

FIGURE 4 shows one embodiment 40 of the operation of an anticipatory utility control device when it is time to change operational modes. Process 401 determines when it is time to change a mode. This can be based on user profile or premises profile and can be based on current monitored conditions of the premises or on a periodic or time-controlled basis. If it is time to change, process 402 determines if the current user is known or can be anticipated. If not, process 403 allows the device to go into its normal mode based on a combination of time, location, monitored conditions, external information/control.

If the current user is known or can be anticipated based on known characteristics of the various possible user's then process 404 uses the profile of the known or anticipated user and in conjunction with processes 405 and 406 adjusts the operational characteristics and the display of the device to match the profile of the known or anticipated user.

In some situations the next anticipated user can be an unknown user, i.e. someone not previously "seen" by the device. In such a situation, the device can use a profile established for such an unknown user.

FIGURE 5 shows one embodiment 50 of the use of the system in the absence of a particular user. This could occur when a user does not arrive for a meeting in a particular conference room. Thus, as shown by process 501, the system at a particular time takes a "roll" call of present users. This can be done in any one of a number of ways. For example, fingerprints can be gathered upon entering the room, RFID can be used, cellular phones can be identified, near-field ID can be used, etc.

Process 502 can then determine who is absent from a given location when otherwise that person was anticipated to be present. This can be by pre-programming, such as would occur for a home when, say, at midnight the house should have three children in their respective bedrooms until 7AM. Or, in a business setting, a conference room software application can have a list of all attendees at each meeting.

Process 503 would then sound the appropriate alarm depending upon the circumstances. One such alarm could be a simple phone call to the missing user. This system then could be used in school situations (or custodial situations) where if a student leaves the premises before the end of the school day an alarm is sounded.

Although the present invention and its advantages have been described in detail, it should be understood that various changes, substitutions and alterations can be made herein without departing from the spirit and scope of the invention as defined by the appended claims. Moreover, the scope of the present application is not intended to be limited to the particular embodiments of the process, machine, manufacture, composition of matter, means, methods and steps described in the specification. As one of ordinary skill in the art will readily appreciate from the disclosure of the present invention, processes, machines, manufacture, compositions of matter, means, methods, or steps, presently existing or later to be developed that perform substantially the same function or achieve substantially the same result as the corresponding embodiments described herein may be utilized according to the present invention. Accordingly, the appended claims are intended to include within their scope such processes, machines, manufacture, compositions of matter, means, methods, or steps.

## Claims

1. A method for controlling information flow to a premises user, said method comprising:
monitoring various parameters on a continuous basis; and
from time to time changing a user presentation on a utility control device to reflect an anticipated present need of a particular user, said control device being primarily available to a plurality of users to control a specific piece of premises equipment.

2. The method of claim 1 wherein said monitoring is performed on the basis of at least one of the following: scheduled, anomaly, irregular.

3. The method of claim 1 wherein said monitored parameters are selected from the list of: light, sound, color, humidity, motion, voice, weight, speed, direction, impact, vibration, odor, temperature, smoke, alerts environmental condition, power consumption, odor, power grid conditions, electronic identification, (e.g., cellular telephone, RF devices (e.g., Bluetooth, WiFi, intelligent remote controls), Internet access, announcements, the real-time price of power, status of the security system, occupancy, CO and CO₂, equivalent and avoided greenhouse gas emissions, messages, notification of an important call, status of investments/stock portfolio/exchange rates, compliance issues, medication alerts, exercise alerts and messages, medical alerts, health of aging parent/loved ones, status of future meeting/conference call, a "times-up" warning for TV or computer games, heavy traffic warning for the commute home, accidents, pollen index, allergy alerts, homeland security, biohazard warnings, the upcoming weather, indicators as to equipment health, score of the game, alerts for local merchant specials, real-time asset management/maintenance.

4. The method of claim 3 wherein said user presentation is selected from the list of: utility operational buttons, displays, audible messages, visual messages, lights RF messages, PLC messages, telephone messages, pager messages, text messages, digital and analog messages.

5. The method of claim 1 wherein said specific piece of premises equipment is selected from the list of: light switch, power outlet, phone jack, Internet connection, cable connection, thermostat, touch screen, information display screen, appliance, communications device, keypad, access card, security card, credit card, scanner, RFID, telephone, microphone (voice), VoIP, speaker (audio out), television, remote control, doorbell, electric door opener.

6. The method of claim 1 wherein said present need is based, at least in part, on a known profile of a determined particular user.

7. The method of claim 6 wherein said known profile is a mobile profile not pre-established at such premises.

8. The method of claim 6 wherein said known profile includes sophisticated data pertaining to said particular user.

9. The method of claim 8 wherein said changing user presentation comprises changing premises environmental parameters.

10. The method of claim 8 wherein said changing user presentation comprises issuing alerts of said particular user based on said user's profile.

11. A premises monitoring system comprising:
a utility control device primarily associated with a particular utility to be controlled from a particular location;
display on said device changeable from time to time to allow a user to observe a plurality of different utilities; and
control operative in response to user a presence of a particular user for adjusting said changeable display in accordance with preferences of said particular user.

12. The monitoring system of claim 11 wherein said control device is operable by said particular user for controlling selected utilities based upon a current display of said device.

13. The monitoring system of claim 11 wherein said control device is operable by said particular user for controlling selected utilities for at least one other user.

14. The monitoring system of claim 11 wherein said control device is operable by the absence of said particular user.

15. The monitoring system of claim 11 wherein said control device is operable to accept commands from said user for changing said display.

16. The monitoring system of claim 11 wherein said control device is operable to read user profiles and accept commands from said user for changing said display in accordance with said user profile.

17. The monitoring system of claim 11 wherein said control device is operable to read user profiles and dynamically determine commands for said user for changing said display based upon said user profile.

18. The monitoring system of claim 11 wherein said control is operable by commands from different users to establish displays for each said user in accordance with a commanding user's profile such that a same command from different users could result in different displays.

19. A device for use within a premises for controlling at least one utility; said device comprising:
means for connection to said utilities to be controlled;
a processor for accepting a sensed presence of a particular user;
means for enabling the operation of said device to conform to parameters associated with said particular user; and
means for enabling the operation of said device to conform to parameters associated with an unexpected absence of said user.

20. The device of claim 19 further comprising means for enabling the operation of said device to conform to parameters associated with an unexpected absence of said user.

21. The device of claim 19 where said sensed presence is selected from the list of: pressure, biometrics, electronic data tags (credit cards, cell phones, RFID) anticipation based on prior use, immediate prior actions, time of day, and location of said particular user.

22. The device of claim 19 wherein said device further comprises:
means for accepting said sensed user presence from a location remote form said user.

23. The device of claim 19 wherein said device further comprises:
means for determining said sensed user presence form inputs locally available to said device.

24. The device of claim 19 wherein said device further comprises:
a display for displaying attributes pertaining to said enabled operation.

25. The device of claim 24 wherein said display comprises:
input sensors for accepting commands from said particular user.

26. The device of claim 25 wherein said commands need not necessarily have a same attribute among different sensed users.

27. A premises control system comprising:
a plurality of devices adapted for interconnection via a utility distributed throughout said premises;
each said device temporarily configurable to provide a service as well as information desired by a user, said service selected from the list of: light switch, power outlet, thermostat, touch screen, appliance, communications device, keypad, access card, security card, credit card, scanner, electronic ID, RFID, telephone, microphone, VoIP, speaker, television, remote control, doorbell, and said information selected from the list of: color, humidity, motion, voice, weight, speed, direction, impact, vibration, odor, temperature, smoke, alerts, odor, electronic identification, (e.g., cellular telephone, RF devices (e.g., Bluetooth, WiFi, intelligent remote controls), telephones, environmental condition, power consumption, power grid conditions, Internet access; announcements; the real-time price of power, status of the security system, occupancy, CO and CO₂, equivalent and avoided greenhouse gas emissions, messages, notification of an important call, status of investments/stock portfolio/exchange rates, compliance issues, medication alerts, exercise alerts and messages, medical alerts, health of aging parent/loved ones, status of future meeting/conference call, a "times-up" warning for TV or computer games, heavy traffic warning for the commute home, accidents, pollen index, allergy alerts, homeland security, biohazard warnings, the upcoming weather, indicators as to equipment health, score of the game, alerts for local merchant specials, real-time asset management/maintenance;
each said device comprising:
an interface for accepting input from a user and for displaying messages to said user; and
means for configuring said device to achieve an anticipated usage of said user.

28. The control system of claim 27 wherein said interface comprises at least one touch responsive portion.

29. The control system of claim 27 wherein said interface comprises at least one sound/voice responsive portion.

30. The control system of claim 27 wherein said interface comprises at least one electronic ID responsive portion.

31. The control system of claim 27 wherein said anticipated usage is selected from the list of: time, sensor inputs, user defined rules, system interactions of inputs and outputs, previous action patterns of a device user, instructions provided external to said device.

32. The control system of claim 27 wherein said anticipated usage is selected from a list of anomalies.

33. The control system of claim 27 further comprising:
means for accepting information from sources external to said premises, and
wherein said externally provided instructions are provided by accepted ones of said information.

34. A utility control device comprising:
terminals for connecting to at least one utility of a premises;
a processor for configuring said device to perform at least one set of operations;
an interface for presenting to a plurality of users any said configuration pertaining to operations currently available to be performed by said device; and
said processor further operable for configuring said device to conform to pre-established preferences of a particular user in proximity to said device at a particular time.

35. The device of claim 34 wherein said processor is further operable for configuring said device to conform to dynamically established preferences of a particular user in proximity to said device at a particular time.

36. The device of claim 34 wherein said processor is further operable for configuring remote devices to conform to pre-established preferences of a particular user in proximity to said device at a particular time.

37. The device of claim 34 wherein said processor is further operable for configuring remote devices to conform to dynamically established preferences of a particular user in proximity to said device at a particular time.

38. The device of claim 34 wherein said interface accepts input from a user.

39. The device of claim 34 wherein said pre-established preferences of said particular user are selected from the list of: time, previous action patterns of said particular user, instructions provided external to said device.

40. The device of claim 34 wherein said dynamically established preferences of said particular user are determined from electronic ID.

41. The device of claim 34 further comprising:
a receiver for accepting information from a location external to said device; and
wherein an externally provided instruction is used by said processor to configure said device.

42. The device of claim 41 further comprising:
a communication path for receiving information from a device in a remote location, said received information pertaining to events occurring at said remote location.

43. The device of claim 42 wherein said interface is operable for accepting commands from said particular user, said commands for communication via said communication path to said remote location.
